# EUROPÄISCHE PATENTANMELDUNG

(11) **EP 3 988 929 A1**
(43) Veröffentlichungstag der Anmeldung: **27.04.2022**
(21) Anmeldenummer: 20202731.4
(22) Anmeldetag: 20.10.2020
(51) Int. Cl.: G01N 25/72

(54) **VERFAHREN ZUM PRÜFEN EINER SCHWEISSVERBINDUNG EINES GENERATORSTATORS EINER WINDENERGIEANLAGE SOWIE HALTERUNG ZUM AUSFÜHREN DES VERFAHRENS UND SYSTEM MIT DER HALTERUNG**

(71) Anmelder: Wobben Properties GmbH, 26607 Aurich (DE)
(72) Erfinder: Aust, Florian, 32312 Lübbecke (DE); Schrobsdorff, Simon, 26556 Eversmeer (DE)
(74) Vertreter: Eisenführ Speiser

(57) **Zusammenfassung**

Die Erfindung betrifft ein Verfahren zum Prüfen einer Schweißverbindung (56) eines Generatorstators (10), insbesondere einer Windenergieanlage (100), das die Schritte Bereitstellen eines Generatorstators (10) mit einer oder mehreren Gruppen von Schweißverbindungen (56), wobei die Schweißverbindungen (56) der oder jeder der Gruppe jeweils, insbesondere einen im Wesentlichen gleichen radialen Abstand von einem Punkt (36) einer Achse (38) des Generatorstators (10) aufweisen, Bereitstellen einer oder mehrerer Kameras (22), insbesondere Infrarotkameras, Festlegen einer Kreislinie (32, 34) für die Kamera (22) oder jeweils für jede der Kameras (22) wobei die Kreislinie (32, 34) oder Kreislinien (32, 34)jeweils einen Mittelpunkt (36) aufweisen, durch den oder die jeweils die Achse (38) des Generatorstators (10) verläuft und Verfahren der einen oder mehreren Kameras (22) auf mehrere unterschiedliche Aufnahmepositionen (26) der Kamera auf der der Kamera (22) zugeordneten Kreislinie (32, 34) oder, wobei alle Aufnahmepositionen (26) jeder der Kameras (22) jeweils auf der jeweils der Kamera (22) zugeordneten Kreislinie (32, 34) liegen, umfasst.

Ferner betrifft die Erfindung eine Halterung (16) sowie ein System (14).

## Beschreibung

Die Erfindung betrifft ein Verfahren zum Prüfen einer Schweißverbindung eines Generatorstators, insbesondere einer Windenergieanlage, sowie eine Halterung zum Ausführen des Verfahrens und ein System mit der Halterung.

Generatorstatoren, nämlich Statoren von Generatoren, sind allgemein bekannt. Zusammen mit einem Generatorrotor dient ein Generatorstator zum Erzeugen elektrischer Energie. Die vorliegende Erfindung betrifft hierbei besonders Generatorstatoren einer Windenergieanlage. Bei Windenergieanlagen wird durch einen aerodynamischen Rotor der Generatorrotor angetrieben und in eine Drehbewegung versetzt. Durch diese Drehbewegung und eine im Generatorrotor erzeugte Erregung wird im Generatorstator ein Strom induziert und so eine Energie aus dem Wind in elektrische Energie gewandelt. Zum Bereitstellen des Erregerfeldes im Generatorrotor, der auch Generatorläufer oder kurz Läufer genannt wird, sind Wicklungen vorgesehen, um mit einem elektrischen Strom das Erregerfeld in den Wicklungen zu erzeugen. Alternativ können Permanentmagneten vorgesehen sein, um das Erregerfeld zu erzeugen. Ferner weißt auch der Generatorstator Wicklungen auf, in die die elektrische Energie durch die Rotation des Erregerfelds induziert wird.

Hinlänglich aus dem Stand der Technik bekannt ist, dass die Wicklung des Generatorstators aus einem Draht gebildet wird, der um durch Nuten gebildete Zähne gewickelt wird, um so Spulen zu bilden. Aufgrund der zunehmenden Größe von Windenergieanlagengeneratoren und diversen Vorteilen bei der Fertigung werden immer häufiger Formspulen im Generatorstator verwendet, um die Wicklungen bereitzustellen. Formspulen entsprechen vorgefertigten Spulen aus einem ein- oder mehrlagigen Stab, der in mehreren Windungen vorgeformt ist und deren Stableiter zwei Enden aufweist, um mit weiteren Formspulen verbunden zu werden. So wird ein Generatorstator mit einer Vielzahl der vorgefertigten Formspulen bei der Herstellung bestückt und nach der Bestückung die Enden der Formspulen zum Bereitstellen der Wicklungen verbunden.

Zum Verbinden der Enden der Formspulen werden häufig Verbindungslaschen, die auch Verbindungselemente genannt werden können, verwendet. Die Verbindungselemente werden jeweils mit Enden zweier unterschiedlichen Formspulen durch Schrauben oder Schweißen verbunden. Bislang wurden die Formspulen weitestgehend aus Kupfermaterial hergestellt, wohingegen in jüngster Zeit auch Aluminiumformspulen eingesetzt werden, da diese bei der bereits oben genannten zunehmenden Größe von Windenergieanlagengeneratoren beispielsweise Gewichtsvorteile aufweisen. Die Enden von Aluminiumformspulen lassen sich aufgrund der vergleichsweise weichen Materialeigenschaften von Aluminium jedoch nicht besonders zuverlässig über Schraubverbindungen verbinden. Schweißverbindungen stellen grundsätzlich eine bessere Alternative dar, wobei Schweißverbindungen aus Aluminium ebenfalls aufwendiger herzustellen sind als bei Kupfer und jedenfalls ein höheres Fehlerpotenzial besteht.

Zur Vermeidung von Fehlfunktionen bei einem Generator ist es daher sinnvoll die Schweißverbindungen, vorzugsweise unmittelbar nach deren Herstellung, zu prüfen. Bei großen Windenergieanlagengeneratoren umfasst dieser jedoch eine Vielzahl von beispielsweise mehr als 1000 dieser Schweißverbindungen, so dass eine Prüfung, beispielsweise durch Inaugenscheinnahme, sehr aufwendig ist.

Aufgabe der vorliegenden Erfindung ist es daher, den Problemen des Standes der Technik zu begegnen. Jedenfalls soll eine Lösung dafür gefunden werden, die Schweißverbindungen eines Generatorstators einer Windenergieanlage schnell, günstig und zuverlässig zu prüfen. Jedenfalls soll eine Alternative zum Stand der Technik gefunden werden.

Hierzu wird ein Verfahren gemäß Anspruch 1 vorgeschlagen.

Demnach wird zum Prüfen einer Schweißverbindung eines Generatorstators einer Windenergieanlage vorgeschlagen, einen Generatorstator bereitzustellen. Der bereitgestellte Generatorstator umfasst eine oder mehrere Gruppen von Schweißverbindungen. Die Schweißverbindungen einer Gruppe weisen vorzugsweise einen im Wesentlichen gleichen radialen Abstand von einem Mittelpunkt auf einer Achse des Generatorstators auf. Im Falle mehrerer Gruppen von Schweißverbindungen weisen vorzugsweise die Schweißverbindungen jeder der Gruppen jeweils einen im Wesentlichen gleichen radialen Abstand von einem Mittelpunkt auf einer Achse des Generatorstators auf.

Ferner werden eine oder mehrere Kameras bereitgestellt. Die Kameras sind vorzugsweise Infrarotkameras. Ferner wird für die Kamera eine Kreislinie oder im Falle mehrerer Kameras für jede der Kameras eine Kreislinie festgelegt. Die Kreislinie oder die Kreislinien beziehen sich jeweils auf den oder einen Mittelpunkt, durch den bzw. durch die jeweils die Achse des Generatorstators verläuft. Vorzugsweise wird eine Kreislinie in Abhängigkeit eines radialen Abstands der Schweißverbindungen festgelegt. Jeder Gruppe ist somit eine Kreislinie zugeordnet.

Weiter wird die eine oder die mehreren Kameras auf mehrere unterschiedliche Aufnahmepositionen verfahren. Im Falle einer einzelnen Kamera erfolgt das Verfahren so, dass alle Aufnahmepositionen der Kamera auf der der Kamera zugeordneten Kreislinie liegen. Im Falle mehrerer Kameras liegen alle Aufnahmepositionen jeder der Kamera jeweils auf der jeweils der Kamera zugeordneten Kreislinie.

Gemäß dem Verfahren wird anstatt einer Inaugenscheinnahme der Schweißverbindungen durch eine Person eine auf definierte Aufnahmepositionen verfahrbare Kamera eingesetzt, um so auch einen protokolierbaren Nachweis über die Qualität der Schweißverbindung zu erhalten. Der Erfindung liegt die Erkenntnis zugrunde, dass aufgrund der Größe eines Generatorstators einer Windenergieanlage keine Gesamtbetrachtung des Generatorstators möglich ist und daher kein Einzelbild zur Überprüfung aller Schweißverbindungen gleichzeitig aufgenommen werden kann. Insbesondere wird auch berücksichtigt, dass eine Vielzahl von Kameras, die beispielsweise an festen Positionen um den Generatorstator angeordnet werden, um eine Prüfung möglichst zeitsparend zu erfüllen, aus Kostengründen nachteilig ist, da für eine Schweißverbindungsprüfung einzusetzende Spezialkameras sehr teuer sind. Eine möglichst geringe Anzahl von Kameras zur Prüfung eines gesamten Generatorstators wird gemäß der Erfindung ermöglicht. Ferner ist das Verfahren einer oder nursehrweniger Kameras auf den Kameras zugeordneten Kreislinien, die vorab festgelegt werden, vorteilhaft, um eine Vergleichbarkeit der Bilder oder Aufnahmen der Kameras ohne aufwendige Nachbearbeitung der Aufnahmen oder Bilder zu ermöglichen.

Eine kostengünstige und schnelle sowie zuverlässige Prüfung der Schweißverbindungen ist somit möglich.

Gemäß einer ersten Ausführungsform wird die Kreislinie für die oder eine der bereitgestellten Kameras in Abhängigkeit des Sichtfelds der bereitgestellten Kamera und insbesondere in Abhängigkeit des radialen Abstands der Schweißverbindungen einer Gruppe gewählt. Hierbei wird die Kreislinie so gewählt, dass mindestens zwei, vorzugsweise mehr als 20 und/oder weniger als 100, Schweißverbindungen der oder einer der Gruppen gleichzeitig im Sichtfeld der Kamera liegen.

Das Sichtfeld einer Kamera beschreibt insbesondere die Gesamtheit aller mit einem Einzelbild aufgenommenen Bildpunkte in einem Bild. Vorzugsweise ist durch eine möglichst große Anzahl von Schweißverbindungen in einem Bild eine Vergleichbarkeit der in einem Bild aufgenommenen Schweißverbindungen möglich, wobei vorzugsweise verhindert wird, dass zu viele Schweißverbindungen in einem Bild dargestellt werden und so eine Prüfung oder Auswertung des Bildes erschwert wird. Je mehr Schweißverbindungen gleichzeitig im Sichtfeld zu sehen sein sollen, desto weiter entfernt muss die Kamera positioniert werden. Hierbei bietet der Einsatz eines Weitwinkelobjektivs nur bis zu einem gewissen Grad eine Lösung, da durch solch ein Objektiv das Bild verzerrt wird. Demgegenüber besteht die Gefahr, dass sich Schweißverbindungen gegenseitig verdecken, wenn die Kamera zu nah ist, da die Schweißverbindungen häufig in mehreren, beispielsweise drei, Lagen übereinander angeordnet sind. Eine weit entfernte Kamera hat allerdings mehrere Nachteile. Zum einen ist sie in der Regel teurer, da sie eine höhere Auflösung aufweisen muss. Zum anderen muss sie befestigt werden. Können also mit einer entfernten Kamera nicht alle Schweißverbindungen gleichzeitig erkannt werden, muss diese trotzdem verfahren werden. Es würde also eine sehr aufwändige und vor allem sehr große und unhandliche Stativkonstruktion notwendig werden. Außerdem muss das Sichtfeld der Kamera frei sein. Eine weit entfernte Kamera, beispielsweise an einer Hallendecke, würde Kranfahrten in der Halle verbieten, während die Prüfung abläuft. Eine Kamera auf einem hohen Pfahl oder Stativ würde Kranfahrten ebenfalls über dem Prüfplatz unmöglich machen.

Besonders bevorzugt wird die Kreislinie so gewählt, dass jede der in einem Bild aufgenommenen Schweißverbindungen mindestens 3 x 3 oder mindestens 5 x 5 Bildpunkte belegt.

Vorzugsweise wird die Kamera so angeordnet, dass eine Oberfläche der Schweißverbindung im Wesentlichen parallel zu einer Linsenebene der Kamera ausgerichtet ist.

Gemäß einer weiteren Ausführungsform ist die Kamera eine Wärmebildkamera, die auch Infrarotkamera genannt wird und zum Aufnehmen von Wärmebildern dient. Weiter umfasst der Generatorstator mindestens eine Wicklung, die mehrere Formspulen umfasst. Die Formspulen sind über Verbindungselemente verbunden. Eine Schweißverbindung entspricht so einer Verbindung eines Endes einer Formspule mit einem Ende, insbesondere einer Öffnung im Ende, eines Verbindungselements. Mit dem Verbindungselement ist vorzugsweise ein weiteres Ende einer weiteren Formspule verbunden.

Gemäß dem Verfahren wird die Wicklung mit den Schweißverbindungen mit einem Strom und/oder einer Spannung angeregt, wobei der Strom vorzugsweise ein Gleichstrom und/oder die Spannung eine Gleichspannung ist. Durch Anregen der Wicklung mit einem Strom und/oder einer Spannung wird aufgrund des Leitungswiderstands in der Wicklung Wärme erzeugt. Der Erfindung liegt die Erkenntnis zugrunde, dass eine fehlerhafte Schweißverbindung, also eine Schweißverbindung, die nicht ideal ausgebildet ist, einen vergleichsweise höheren Widerstand als eine korrekte oder ideal ausgebildete Schweißverbindung aufweist. Demnach wird eine nicht korrekt gebildete Schweißverbindung stärker durch den Strom und/oder die Spannung erwärmt, als eine korrekt ausgebildete Schweißverbindung. Durch Detektion mit einer Wärmebildkamera lassen sich so nicht korrekt ausgebildete Schweißverbindungen aufgrund ihrer vergleichsweise hohen Temperatur auf einfache Weise detektieren. Der Einsatz eines Gleichstroms oder einer Gleichspannung anstatt einem Wechselstrom oder einer Wechselspannung zum Anregen der Wicklung ist vorteilhaft, um umliegende Messapparaturen oder elektronische Gerät ohne weitere Abschirmung unbeeinflusst zu lassen.

Gemäß einer weiteren Ausführungsform werden in jedem aufgenommenen Bild jeweils die Bildbereiche oder Positionen erkannt, in denen zu prüfende Schweißverbindungen dargestellt sind. Die Erkennung der Bildbereiche erfolgt hierbei automatisch zumindest teilweise unter Verwendung von Bildverarbeitungsverfahren. Derartige Bildverarbeitungsverfahren sind durch Programmierung kostengünstig mittels eines Prozessors realisierbar, so dass auf weitere Hardware, zumindest teilweise, verzichtet werden kann. Zusätzlich oder alternativ ist es jedoch auch möglich, die Bildbereiche mit Hilfe eines Lasermessgeräts zu bestimmen.

Gemäß einer weiteren Ausführungsform umfassen die angewendeten Verfahren der Bildverarbeitung mindestens einen Kantendetektionsalgorithmus oder einen Objekterkennungsalgorithmus. Der Objekterkennungsalgorithmus kann vorzugsweise auf einem neuronalen Netz basieren, um die Verbesserung der Erkennung von Schweißverbindungen zu erzielen. Die Verfahren der Bildverarbeitung dienen insbesondere, um eine Position eines Verbindungselements zum Verbinden der Enden mindestens zweier Spulen des Generatorstators oder zumindest eine Position einer Kante des Verbindungselements zu erkennen. In Abhängigkeit der erkannten Position wird dann zumindest eine erste Koordinate in dem aufgenommenen Bild bestimmt, an der oder die Schweißverbindungen jeweils liegen. Die erste Koordinate ist insbesondere die Koordinate, die orthogonal zur Kreislinie der Kamera liegt (die Radialkoordinate).

Gemäß einer Ausführungsform entsprechen die Verbindungselemente u-förmigen Verbindungslaschen, die an den gegenüberliegenden Enden der U-Form jeweils eine Öffnung aufweisen. Die Enden sind über einen Steg verbunden, der eine im Wesentlichen gerade Kante aufweist, die durch einen Kantendetektionsalgorithmus erkennbar ist. Die Form der Verbindungselemente ist also vordefiniert. Diese Öffnungen werden jeweils über ein Ende einer Formspule gestülpt und dann die Formspule in der jeweiligen Öffnung verschweißt. Da die Form der Verbindungselemente oder Verbindungslaschen bekannt ist, kann durch Detektion des Verbindungselements oder bereits durch Detektion einer Kante des Verbindungselements auf zumindest eine Koordinate der immer gleich im Verbindungselement angeordneten Öffnung, geschlossen werden. Insbesondere durch Festlegung der Kreislinie für die Aufnahmepositionen weisen die zu erkennenden Verbindungselemente oder Verbindungslaschen eine im Wesentlichen gleichbleibende Größe in einem Bild auf, so dass der benötigte Kantendetektionsalgorithmus oder der Objekterkennungsalgorithmus auf einfache Weise realisierbar oder programmierbar ist. Eine automatische Erkennung zunächst zumindest einer ersten Koordinate der Verbindungslasche ist somit sicher möglich.

Zwar sind alle Kanten der Verbindungslasche über den Kantendetektionsalgorithmus erkennbar. Auch die Form der Lasche ist, da sie bekannt ist, mittels Bilderkennungsalgorithmus erkennbar. Die langen Kanten des geraden Stegs lassen sich allerdings am einfachsten erkennen, da sie am längsten sind und aufgrund der Aufnahmeposition am deutlichsten aufgrund ihres Kontrasts zu erkennen sind.

Gemäß einer weiteren Ausführungsform werden die Aufnahmepositionen manuell oder automatisch angefahren. Vorzugsweise wird ein Winkel auf der Kreislinie für jede Aufnahmeposition zu einer vordefinierten Ausgangsposition der Kamera bestimmt. Ein automatisches Anfahren der Aufnahmepositionen ist unter Verwendung eines Positionsgebers und Vorgabe der Winkel auf der Kreislinie auf einfache Weise automatisierbar möglich. Der Positionsgeber ist vorzugsweise ein Drehgeber, der eine relative Position zur Kamera aufweist, die während der Aufnahmen fest und vorgegeben ist, realisierbar. Der Drehgeber, der auch Inkrementalgeber genannt werden kann, steht bei Veränderung der Position auf der Kreislinie in Kontakt mit dem Generatorstator und kann somit eine relative Veränderung des Winkels anzeigen. In Abhängigkeit des Positionsgebers, der ausgehend von der vordefinierten Ausgangsposition einen Winkel an einer Aufnahmeposition anzeigt, ist eine zweite Koordinate einer Schweißverbindung in einem von dieser Aufnahmeposition aufgenommen Bild bestimmbar. Vorzugsweise sind die Winkel zwischen jeweils zwei benachbarten Aufnahmepositionen im Wesentlichen gleich groß oder als gleich groß vordefiniert.

Vorzugsweise wird demnach ein Bild aufgenommen und die Position jeder der Schweißverbindungen einerseits durch den Kantendetektionsalgorithmus oder einen Objekterkennungsalgorithmus und andererseits durch den mit dem Positionsgeber bestimmten Winkel bestimmt. Eine exakte Bestimmung der Position einer Schweißverbindung oder jeder der Schweißverbindungen in einem Bild ist somit möglich.

Gemäß einer weiteren Ausführungsform wird die Wicklung durch Vorgeben einer Stromstärke, die, vorzugsweise pro Wicklungsstrang, insbesondere mehr als 200 A oder mehr als 500 A beträgt, und/oder einer Spannung, insbesondere von mehr als 100 V oder mehr als 300 V, und/oder mit einer Leistung von mehr als 100 kW oder mehr als 150 kW derart erwärmt, dass ein Temperaturunterschied der Wicklung zur Umgebungstemperatur auf oder oberhalb eines vordefinierten Schwellenwerts liegt. Der Schwellenwert entspricht insbesondere 20 K, 40 K oder 50 K. Nimmt man beispielsweise eine Umgebungstemperatur von 300 K an, so wird der Temperaturunterschied auf oder oberhalb des Schwellenwerts erreicht, wenn die Wicklung eine Temperatur von 320, 340 beziehungsweise 350 K erreicht.

Der Gesamtstrom hängt vorzugsweise von der Verschaltung der einzelnen Stränge der Gesamtwicklung ab. Werden alle Wicklungsstränge in Reihe geschaltet, ist der Gesamtstrom gleich dem Strom eines Strangs. Werden alle Stränge parallelgeschaltet, ist der Gesamtstrom ein Vielfaches des pro Wicklungsstrang vorgesehenen Stroms. Bei einer Kombination von Parallel- und Reihenschaltung ergibt sich eine dazwischenliegende Stromstärke. Theoretisch ist es auch möglich, die Wicklung gar nicht zu verschalten, sondern immer nur einzelne Stränge zu erwärmen. Dies dauert länger, da das Verfahren für jeden Strang wiederholt werden muss, allerdings ist dann weniger Leistung für die Erwärmung notwendig. Daher wird nur eine weniger leistungsstarke Stromquelle benötigt. Bevorzugt wird allerdings die gleichzeitige Erwärmung der gesamten Wicklung.

Die Umgebungstemperatur entspricht vorzugsweise einer Temperatur der den Generatorstator umgebenden Umgebungsluft in einem Abstand von mindestens 30 cm, mindestens 50 cm oder mindestens 1 m. Vorzugsweise werden Aufnahmen mit der Kamera erst dann ausgeführt, wenn der Temperaturunterschied der Wicklung zur Umgebungstemperatur auf oder oberhalb des vordefinierten Schwellenwerts liegt.

Es hat sich durch Versuche gezeigt, dass ein Erreichen eines vordefinierten Temperaturunterschieds oberhalb des Schwellenwerts besonders geeignet ist, um eine eindeutige Unterscheidung zwischen korrekten und nicht korrekten Schweißverbindungen zu ermöglichen. Infrarotkameras erfordern nämlich eine Temperaturdifferenz. Liegt keine oder eine zu geringe Temperaturdifferenz vor, ist eine Messung sehr schwierig oder unmöglich, da der Einfluss der Infrarotstrahlung der Umgebung zu groß ist und die Messung verfälscht. Beträgt also die Umgebungstemperatur beispielsweise 350 K und die Wicklungstemperatur ebenfalls 350 K, dann ist die Thermografieaufnahme nicht auswertbar.

Gemäß einer weiteren Ausführungsform wird zur Auswertung ein Referenzwert vorbestimmt oder die kälteste Schweißverbindung in einem aufgenommenen Bild detektiert. Ferner werden die oder alle der gleichzeitig in einem Bild aufgenommenen Schweißverbindungen als fehlerhaft gekennzeichnet, wenn deren Temperatur um mehr als einen vordefinierten Schwellenwert, der insbesondere 10 K, 5 K, 2 K oder 1 K entspricht, vom Referenzwert oder der kältesten Schweißverbindung abweicht. Weiter werden die oder alle der gleichzeitig in einem Bild aufgenommenen Schweißverbindungen als korrekt gekennzeichnet, wenn deren Temperatur um den oder um weniger als den vordefinierten Schwellenwert vom Referenzwert oder der kältesten Schweißverbindung abweichen. Es werden also vorzugsweise die Schweißverbindungspositionen aller Schweißverbindungen in einem aufgenommenen Bild bestimmt. Daraufhin werden die Temperaturen der Schweißverbindungen in den bestimmten Positionen ermittelt und entsprechend die Schweißverbindungen als korrekt oder nicht korrekt gekennzeichnet. Vorzugsweise entsprechen die Positionen der Schweißverbindungen einem Bereich, beispielsweise aus mindestens 3 x 3 Bildpunkten und es wird die Durchschnittstemperatur in diesem Bereich als Temperatur einer Schweißverbindung verwendet.

Gemäß einer weiteren Ausführungsform wird die eingeprägte Stromstärke in/oder die angelegte Spannung an die Wicklung zur Erwärmung nach Erreichen des Temperaturunterschieds oder nach Anregung für eine vorbestimmte Dauer für einen vordefinierten Zeitraum oder bis die Temperatur der Wicklung unter einen vordefinierten Wert abgefallen ist, abgeschaltet. Insbesondere bei einem Vergleich der Temperaturen der Schweißverbindungen mit der kältesten Schweißverbindung in einem Bild kann so verhindert werden, dass eine zu hohe und dauerhafte Temperaturerzeugung zur Beschädigung der Wicklung führt.

Gemäß einerweiteren Ausführungsform wird nachdem mehrere Aufnahmen oder Bilder an unterschiedlichen Aufnahmepositionen aufgenommen wurden, insbesondere sobald alle Schweißverbindungen aufgenommen wurden, automatisch ein Prüfbericht erstellt, der für jede aufgenommene Schweißverbindung eine Auswertung umfasst. Die Auswertung kennzeichnet die Schweißverbindung als fehlerhaft oder korrekt und vermerkt deren Position. Vorzugsweise ist für die Schweißverbindung die Aufnahmeposition und/oder der mit einem Positionsgeber bestimmte Winkel verzeichnet. Der Prüfbericht, der auch Prüfprotokoll genannt werden kann, wird somit automatisch erzeugt und kann für die spätere Verwendung abgelegt werden. Eine Nachvollziehbarkeit der Prüfung ist daher auch im Nachhinein möglich.

Gemäß einer weiteren Ausführungsform umfasst der Generatorstator zwei Gruppen von Schweißverbindungen, wobei in jeder Aufnahmeposition jeweils mindestens zwei Bilder mit zwei unterschiedlichen Kameras aufgenommen werden. Die Kameras weisen eine feste Ausrichtung und einen festen Abstand zueinander auf. Üblicherweise weisen Formspulen ein Ende auf, das in einer Spulenlängsrichtung zeigt, wohingegen ein weiteres Ende abgewinkelt ausgebildet ist. Die in Längsrichtung zeigenden Enden unterschiedlicher Spulen werden dabei über Verbindungselemente verbunden, wohingegen die abgewinkelten Enden über weitere Verbindungselemente verbunden werden. Gemäß einer Ausführungsform wird vorteilhafterweise die Kamera oder die Kameras in einem 90° Winkel zur Schweißverbindung angeordnet, so dass diese also von oben auf die Schweißverbindungen schauen. Vorzugsweise ist so die Linsenebene parallel zur Schweißverbindung angeordnet. Diese Oberseiten der Schweißverbindung sind bei den genannten Formspulen bezüglich der beiden Enden unterschiedlich, so dass hierfür vorteilhafterweise genau zwei Kameras eingesetzt werden. Andere Formen der Formspulen sind möglich, so dass beispielsweise ein Ende in Längsrichtung auf der einen Seite der Spule angeordnet ist, wohingegen das andere Ende auf der gegenüberliegenden Seite in Längsrichtung der Formspule angeordnet ist. In diesem Fall sind vorzugsweise zwei Kameras vorgesehen, die in jeder Aufnahmeposition jeweils ein Bild aufzeichnen, wobei die Kameras eine feste Ausrichtung und Abstand zueinander haben, so dass deren Sichtfelder aufeinander zeigen.

Weiter umfasst die Erfindung eine Halterung zum Ausführen des Verfahrens nach einer der vorgenannten Ausführungsformen. Die Halterung umfasst mindestens eine oder genau zwei Kamerabefestigungen. Die Kamerabefestigung bzw. jede der Kamerabefestigungen dient, um genau eine Kamera, insbesondere Infrarotkamera, fest mit der Halterung zu verbinden. Die Halterung ist entweder ein Roboterarm oder ein Gestänge, wie ein Stativ, mit Rollen, insbesondere Kugelrollen, um die Halterung lagernd auf einem Untergrund in verschiedene Aufnahmepositionen zu verfahren. Alternativ ist auch die Verwendung eines Schienensystems mit Führungsschienen denkbar. Die Kamerahalterung, das Gestänge und das Stativ würden dann auf diesen Schienen bewegt werden oder mithilfe von Führungsschienen geführt werden. Solche Schienen können beispielsweise auf den Boden angebracht oder in den Boden eingebracht sein. Das Stativ kann auf den Schienen verfahren, indem ein Rad wie bei einer Eisenbahn oben auf der Schiene läuft. Alternativ werden seitliche Führungsrollen vorgesehen, die seitlich um die Schiene greifen (einseitig oder beidseitig). Diese Rollen können frei drehend oder angetrieben sein. Somit ist eine Ausrichtung der Kamera, insbesondere der Winkel zu den Schweißverbindungen, fest vorgegeben und die vorgegebenen Aufnahmepositionen können sicher angefahren werden.

Gemäß einer weiteren Ausführungsform ist die Kamerabefestigung ausgebildet, um die Kameraposition der mit der Befestigung verbundenen Kamera in mindestens zwei Richtungen zu variieren und um mindestens eine Achse zu schwenken sowie in der Position zu fixieren. Eine Ausrichtung der Kamera auf Schweißverbindungen unterschiedlicher Generatorstatoren ist somit möglich.

Gemäß einer weiteren Ausführung umfasst die Halterung mindestens zwei Führungsrollen zum Kontaktieren mit dem Generatorstator. Vorzugsweise sind die zwei Führungsrollen horizontal beabstandet nebeneinander angeordnet und zumindest um eine vertikale Achse rotierbar. Eine vertikale Achse beschreibt hier eine Achse, die vorzugsweise zu einem Untergrund, auf dem die Halterung bei Verwendung verfahren wird, senkrecht liegt. Ferner umfasst die Halterung vorzugsweise einen Positionsgeber, insbesondere Drehgeber oder Inkrementalgeber, der entweder mit einer der zwei Führungsrollen realisiert ist oder durch eine dritte Rolle realisiert ist, die mit dem Generatorstator kontaktierbar und ebenfalls um eine vertikale Achse rotierbar ist. Wird eine dritte Rolle verwendet, so wird diese bevorzugt über eine Befestigung mit Federdruck an den Stator gepresst, damit stets Kontakt sichergestellt ist und Schlupf vermieden wird. Bei zwei Rollen ist dies nicht notwendig, da diese naturgemäß immer Kontakt haben, nur bei einer dritten oder mehr Rollen ist für diese zusätzlichen Rollen sicherzustellen, dass diese Kontakt haben. Bevorzugt werden daher nur zwei Rollen verwendet, von denen eine beispielsweise einen Drehgeber aufweist, wenn ein Drehgeber zur Positionsbestimmung verwendet wird. Bevorzugt wird ein Drehgeber oder Inkrementalgeber, wobei alternativ auch ein Positionierungssystem bestehend aus einem am Stator angebrachten Codeband und einem Codeband-Lesegerät (spezielle Kamera) denkbar ist Weiterhin umfasst die Halterung vorzugsweise einen Antrieb, mit dem die Aufnahmepositionen automatisch mit Daten aus dem Positionsgeber angefahren werden. Der Antrieb kann auch einen Positionsgeber integriert haben (Servoantrieb). Gemäß einer Ausführungsform kann der Antrieb anstelle der Führungsrollen vorhanden sein, also z.B. zwei angetriebene Reibräder anstelle von zwei nicht angetriebenen Führungsrollen.

Ferner umfasst die Erfindung ein System mit mindestens einer Halterung nach einer der vorgenannten Ausführungsformen und vorzugsweise einer Kamera, die besonders bevorzugt eine Infrarotkamera ist. Ferner umfasst das System eine Bedieneinheit, einen Bildschirm, wobei die Bedieneinheit und der Bildschirm vorzugsweise als Touchscreen realisiert sind. Die Bedieneinheit dient vorzugsweise zur Steuerung der Anregung und/oderzum Verfahren der Aufnahmeposition. Der Bildschirm dient vorzugsweise zur Betrachtung der Aufnahme in Echtzeit. Zusätzlich dient der Bildschirm vorzugsweise auch zur Anzeige des Prüfergebnisses und weiterer Angaben. Bedieneinheit und Bildschirm sind allgemein sehr flexibel nutzbar und können durch entsprechende Programme beliebig in der Funktion erweitert werden.

Weitere Ausführungsformen ergeben sich anhand der in den Figuren näher erläuterten Ausführungsbeispiele. Hierbei zeigen:
- Figur 1: Eine Windenergieanlage,
- Figur 2: eine Draufsicht auf einen Generatorstator einer Windenergieanlage mit einem Ausführungsbeispiel des Systems,
- Figur 3: einen Schnitt durch einen Generatorstator,
- Figur 4: Verbindungselemente zum Verbinden von Formspulenenden,
- Figuren 5a und 5b: eine Verbindung eines Verbindungselements mit einem Ende einer Formspule,
- Figur 6: eine detailliertere Ansicht eines Systems in einer Seitenansicht,
- Figur 7: eine Draufsicht auf das System der Figur 6 und
- Figur 8: die Schritte des Verfahrens gemäß einem Ausführungsbeispiel.

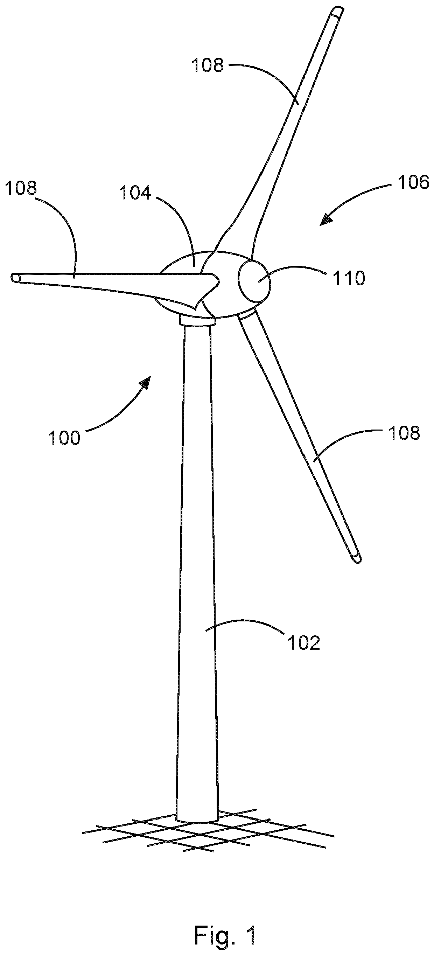

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Generatorrotor eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

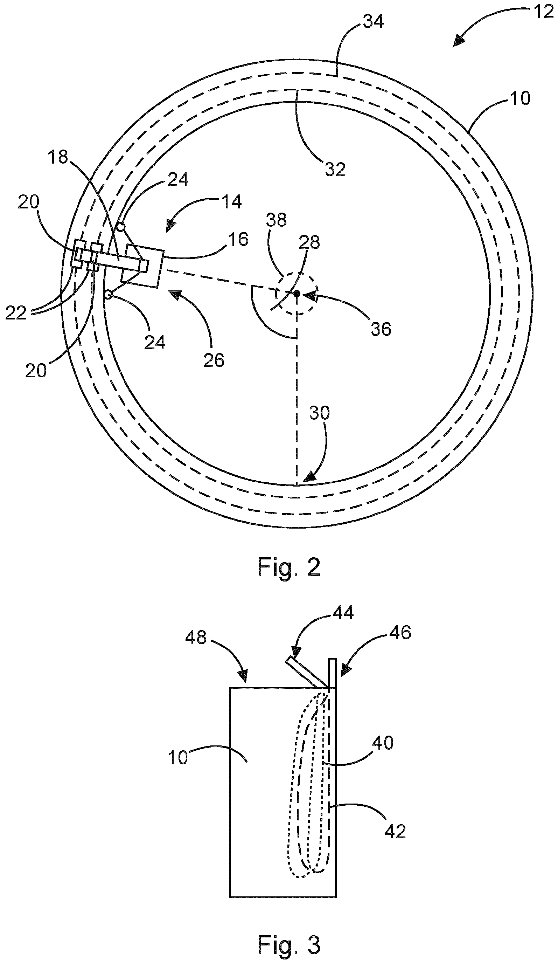

Figur 2 zeigt einen Generatorstator 10 einer Windenergieanlage 100 in der Draufsicht. Der Generatorstator 10 ist über nicht dargestellte Standfüße auf einem ebenen Untergrund 12 positioniert oder bereitgestellt. Ferner ist ein System 14 zum Prüfen von Schweißverbindungen des Generatorstators 10 in einem Innenraum des Generatorstators 10 angeordnet. Das System 14 umfasst eine Halterung 16 mit einem Gestänge, das auch als ein Stativ 18 bezeichnet werden kann. Das Stativ 18 umfasst zwei Kamerabefestigungen 20, mit denen jeweils eine Kamera 22 verbunden ist. Weiter weist die Halterung 16 zwei aus dieser Perspektive erkennbare Führungsrollen 24 auf, die horizontal beabstandet nebeneinander angeordnet sind, und den Generatorstator 10 kontaktieren.

Das System 14 ist in einer Aufnahmeposition 26 angeordnet, der ein Winkel 28 zugeordnet ist. Der Winkel 28 bezieht sich hierbei auf eine Ausgangsposition 30, die vorzugsweise einer ersten Aufnahmeposition entspricht. Ferner sind zwei Kreislinien 32, 34 festgelegt, die Mittelpunkte 36 aufweisen, die in einer hier nicht erkennbaren aber durch eine strichlierte Linie dargestellten Achse 38 liegen. Die Kreislinien 32, 34 dienen zum Festlegen mehrerer Aufnahmepositionen 26 der Kameras 22. Jede der Aufnahmepositionen 26 wird dabei so gewählt, dass mehrere, hier zur besseren Übersicht nicht dargestellte Schweißverbindungen, mit einem Bild aufgenommen werden können.

Figur 3 zeigt exemplarisch einen Schnitt durch den Generatorstator 10 mit einer eingelegten Formspule 40. Die Formspule 40 ist in Nuten des Generatorstators 10 eingelegt und umfasst mehrere Windungen 42, so dass nur die Enden 44, 46 auf der Oberseite 48 des Generatorstators 10 herausragen. Das erste Ende 46 der Formspule 40 zeigt in Spulenlängsrichtung und das zweite Ende 44 ist gegenüber der Spulenlängsrichtung abgewickelt. In Figur 3 ist nur eine Formspule 40 dargestellt, wobei darauf hingewiesen sei, dass zum Bilden einer Wicklung mehrere Formspulen 40 über Verbindungselemente verbunden werden. Dazu werden erste Enden 46 von zwei Formspulen 40 mit einem Verbindungselement verbunden. Zweite Enden 44 von zwei Formspulen werden ebenfalls jeweils verbunden. Schweißverbindungen mit den ersten Enden können somit einer ersten Gruppe und Schweißverbindungen mit den zweiten Enden können somit einer zweiten Gruppe zugeordnet werden.

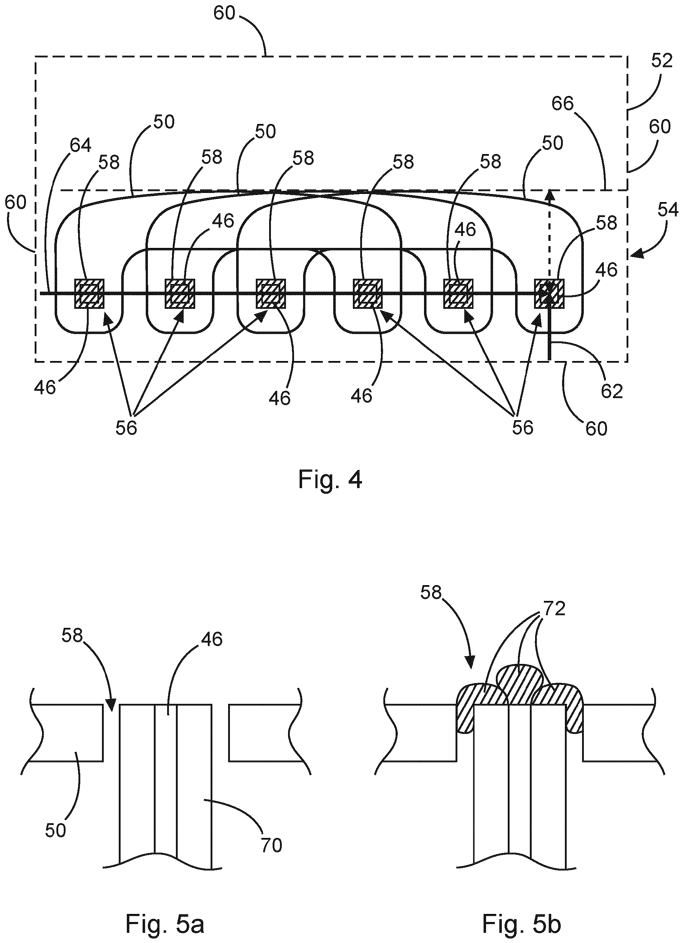

Figur 4 zeigt mehrere Verbindungselemente 50, die beispielsweise gleichzeitig in einem Sichtfeld 52 einer der Kameras 22 liegen und somit gleichzeitig mit einem Bild 54 aufgenommen werden. Figur 4 ist somit exemplarisch für ein von einer Kamera 22 an einer Aufnahmeposition 26 aufgenommenes Bild 54. In dem Bild 54 sind Schweißverbindungen 56 dargestellt, in denen jeweils eine Öffnung 58 erkennbar ist, in die ein Spulenende 46 eingeführt ist. Eine Schweißverbindung wird nach Verschweißen jedes Endes 46 der Formspule 42 mit dem jeweiligen Verbindungselement 50 gebildet. Ausgehend von den Bildkanten 60 lässt sich für jede der Schweißverbindungen 56 eine erste Koordinate 62 sowie eine zweite Koordinate 64 bestimmen. Zur Bestimmung der ersten Koordinate 62 wird beispielsweise eine Kante 66 der Verbindungselemente 50 mit einem Kantendetektionsalgorithmus bestimmt, wobei durch die Vorgabe des Abstands der Öffnungen 58 zur Kante der Abstand zwischen der Kante 66 und einer Schweißverbindung 56 bestimmt werden kann. Die zweite Koordinate 64 wird beispielsweise durch die Aufnahmeposition 26 bestimmt.

Figur 5a zeigt eine Öffnung 58 im Verbindungselement 50 in einem Querschnitt, wobei in diese Öffnung 58 das Ende 46 der Formspule 40 eingeführt ist. Auch dargestellt ist, dass die Formspule 40 mehrere Lagen, nämlich drei, eines Stableiters 70, aufweist. In Figur 5a sind das Spulenende 46 und das Verbindungselement 50 noch nicht verschweißt. Dies ist jedoch in Figur 5b dargestellt, in der eine Schweißverbindung 56 durch ein Fügematerial 72 hergestellt wurde. Es sei angemerkt, dass ein hier dargestellter Spalt zwischen dem Spulenende 46 und der Öffnung 58 des Verbindungselements 50 in der Realität viel kleiner ist und hier nur zur besseren Übersichtlichkeit so dargestellt ist.

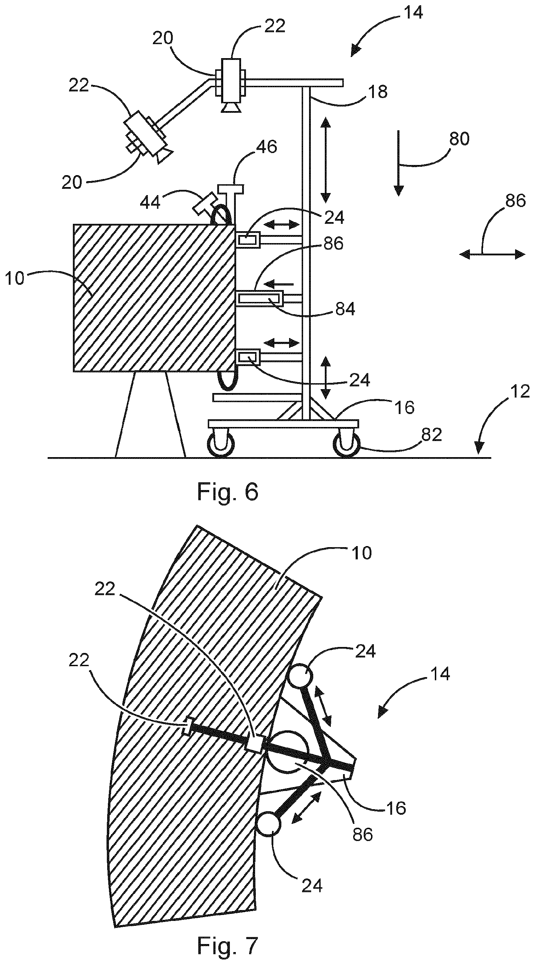

Figur 6 zeigt eine weitere Schnittdarstellung durch den Generatorstator 10 mit den Spulenenden 44, 46, wobei nun zusätzlich das System 14 ebenfalls in der Seitenansicht dargestellt ist. Erkennbar sind die Kameras 22, die mit den Befestigungen 20 an einem Stativ 18 befestigt sind. Das Stativ 18 ist in einer vertikalen Richtung 80 verstellbar, um die Kameras 20 im Abstand zu den Spulenenden 44, 46 zu variieren. Weiterhin sind die Kameras 20 durch die Befestigungen 22 auch schwenkbar. Die Halterung 16 umfasst ferner mehrere Rollen 82, um die Halterung 16 auf einem ebenen Untergrund 12 zu verfahren. Weiter sind auch die Führungsrollen 24 aus Figur 2 dargestellt, die dienen, um die Halterung 16 entlang des Generatorstators 10 zu führen. Hier ist erkennbar, dass weitere Führungsrollen 24 nicht nur horizontal, sondern auch in der vertikalen Richtung 80 untereinander angeordnet sind. Weiterhin ist auch ein Positionsgeber 84 dargestellt, der beispielsweise ein Drehgeber 86 ist. Der Drehgeber 86 sowie die Führungsrollen 24 lassen sich in horizontaler Richtung 86 verschieben, wobei die Position nach der Verschiebung fixierbar ist. So kann ebenfalls die Position der Kameras 20 an einen Generatorstator 10 angepasst werden.

Figur 7 zeigt eine Draufsicht auf die Darstellung der Figur 6. Gleiche Bezugsziffern entsprechen daher gleichen Merkmalen aus Figur 6.

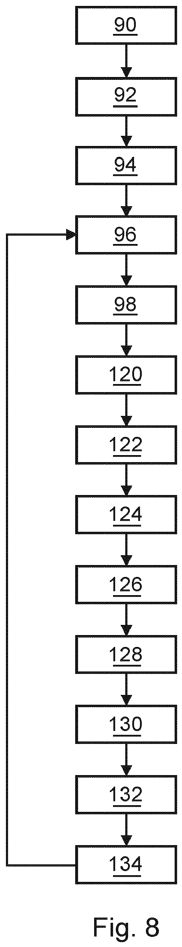

Figur 8 zeigt die Schritte des Verfahrens. In einem Schritt 90 wird ein Generatorstator 10 bereitgestellt. Im Schritt 92 werden dann ein oder mehrere Kameras 22 bereitgestellt. Im Schritt 94 erfolgt ein Festlegen einer oder mehrerer Kreislinien 32, 34 für die Kameras 22. Im Schritt 96 wird dann oder werden dann die Kameras aus einer Ausgangsposition 30 in eine Aufnahmeposition 26 verfahren. Im Schritt 98 wird der Generatorstator 10 mit einem Strom oder einer Spannung angeregt. Im Schritt 120 wird abgewartet, bis sich die Temperatur des Generatorstators um mehr als einen Schwellenwert von der Umgebungstemperatur unterscheidet und daraufhin im Schritt 122 ein Bild mit der oder jeder der Kameras 22 aufgenommen, in dem mehrere Schweißverbindungen 56 erkennbar sind. Im Schritt 124 wird dann das aufgenommene Bild mit Hilfe eines Kantendetektionsalgorithmusses untersucht, um eine Kante eines Verbindungselements 50 zu detektieren. Anhand der detektierten Kante 66 wird im Schritt 126 eine erste Koordinate 62 jeder im Bild 54 aufgenommenen Schweißverbindungen 56 festgelegt. Im Schritt 128 wird daraufhin die zweite Koordinate 64 in Abhängigkeit einer mit dem Positionsgeber gegebenen Position eine zweite Koordinate 64 jeder der Schweißverbindungen 56 bestimmt. Im Schritt 130 wird die kälteste Schweißverbindung 56 der Schweißverbindungen 56 detektiert und im Schritt 132 werden insbesondere alle Schweißverbindungen 56 bestimmt, deren Temperatur um mehr als einen Schwellenwert von der kältesten Schweißverbindung abweichen. Im Schritt 114 werden dann die Ergebnisse der Auswertung protokolliert. Daraufhin verfährt die Kamera wieder im Schritt 96 in die nächste Aufnahmeposition, um ein nächstes Bild aufzunehmen.

## Patentansprüche

1. Verfahren zum Prüfen einer Schweißverbindung (56) eines Generatorstators (10), insbesondere einer Windenergieanlage (100), umfassend die Schritte:
- Bereitstellen eines Generatorstators (10) mit einer oder mehreren Gruppen von Schweißverbindungen (56), wobei insbesondere die Schweißverbindungen (56) der oder jeder der Gruppe jeweils einen im Wesentlichen gleichen radialen Abstand von einem Mittelpunkt (36) einer Achse (38) des Generatorstators (10) aufweisen,
- Bereitstellen einer oder mehrerer Kameras (22), insbesondere Infrarotkameras,
- Festlegen einer Kreislinie (32, 34) für die Kamera (22) oder jeweils für jede der Kameras (22) wobei die Kreislinie (32, 34) oder Kreislinien (32, 34) jeweils einen Mittelpunkt (36) aufweisen, durch den oder die jeweils die Achse (38) des Generatorstators (10) verläuft,
- Verfahren der einen oder mehreren Kameras (22) auf mehrere unterschiedliche Aufnahmepositionen (26) der Kamera (22) auf der der Kamera (22) zugeordneten Kreislinie (32, 34) oder, wobei alle Aufnahmepositionen (26) jeder der Kameras (22) jeweils auf der jeweils der Kamera (22) zugeordneten Kreislinie (32, 34) liegen.

2. Verfahren nach Anspruch 1, wobei die Kreislinie (32, 34) für die oder eine der bereitgestellten Kameras (22) in Abhängigkeit des Sichtfelds (52) der bereitgestellten Kamera derart gewählt wird, dass mindestens zwei, vorzugsweise mehr als 20 und/oder weniger als 100, Schweißverbindungen (56) der oder einer der Gruppen gleichzeitig im Sichtfeld (52) der Kamera (22) liegen.

3. Verfahren nach Anspruch 1 oder 2, wobei der Generatorstator (10) mindestens eine Wicklung mit mehreren Formspulen (40) umfasst, die über Verbindungselemente (50) verbunden sind, wobei die Schweißverbindungen (56) jeweils einer Verbindung eines Endes (44, 46) einer Formspule (40) mit einer Öffnung (58) des Verbindungselements (50) entsprechen und die eine oder mehreren Kameras (22) einer oder jeweils einer Infrarotkamera zum Aufnehmen von Wärmebildern entsprechen und das Verfahren weiter umfasst:
- Anregen der Wicklung mit den Schweißverbindungen (56) mit einem Strom und/oder einer Spannung, wobei der Strom vorzugsweise ein Gleichstrom und/oder die Gleichspannung vorzugsweise eine Gleichspannung ist.

4. Verfahren nach einem der vorhergehenden Ansprüche, wobei in jedem aufgenommenen Bild (54) jeweils die Bildbereiche oder Positionen erkannt werden, in denen zu prüfende Schweißverbindungen (56) dargestellt sind, wobei die Bildbereiche oder Positionen automatisch durch Verfahren der Bildverarbeitung erkannt werden.

5. Verfahren nach Anspruch 4, wobei die Verfahren der Bildverarbeitung mindestens einen Kantendetektionsalgorithmus oder einen Objekterkennungsalgorithmus umfassen und mit dem Verfahren insbesondere eine Position eines Verbindungselements (50) zum Verbinden der Enden (44, 46) mindestens zweier Spulen (40) des Generatorstators oder eine Position einer Kante (66) des Verbindungselements (50) erkannt wird und in Abhängigkeit der erkannten Position zumindest eine erste Koordinate (56) einer Schweißverbindung (56) oder jeder der Schweißverbindungen (56) in dem aufgenommenen Bild (54) bestimmt wird.

6. Verfahren nach einem der vorhergehenden Ansprüche, wobei die Aufnahmeposition (26) manuell oder automatisch angefahren werden, wobei vorzugsweise ein Winkel (28) für jede Aufnahmeposition (38) zu einer vordefinierten Ausgangsposition (30), insbesondere mit einem Positionsgeber, vorzugsweise einem Drehgeber oder Inkrementalgeber, bestimmt wird und in Abhängigkeit des Winkels eine zweite Koordinate (64) der Schweißverbindung bestimmt wird, wobei vorzugsweise die Winkel zwischen jeweils zwei benachbarten Aufnahmepositionen im Wesentlichen gleich groß sind.

7. Verfahren nach einem der vorhergehenden Ansprüche, wobei die Wicklung durch Vorgeben eines Stroms mit einer Stromstärke, die vorzugsweise pro Wicklungsstrang, insbesondere mehr als 200 A oder mehr als 500 A beträgt, oder durch Vorgeben einer Spannung, die insbesondere mehr als 100 V oder mehr als 300 V beträgt, und/oder vorzugsweise mit einer Leistung, die vorzugsweise mehr als 100 kW oder mehr als 150 kW beträgt, derart erwärmt wird, dass ein Temperaturunterschied der Wicklung zu einer Umgebungstemperatur auf oder oberhalb einem vordefinierten Schwellenwert liegt, der insbesondere 20 K, 40 K oder 50 K entspricht.

8. Verfahren nach einem der vorhergehenden Ansprüche, wobei zur Auswertung ein Referenzwert oder die kälteste Schweißverbindung (56) in einem aufgenommenen Bild (54) vorbestimmt wird und
die oder alle der gleichzeitig in einem Bild (54) aufgenommenen Schweißverbindungen (56) als fehlerhaft gekennzeichnet werden, wenn deren Temperatur um mehr als einen vordefinierten Schwellenwert, der insbesondere 10 K, 5 K, 2 K oder 1 K entspricht, vom Referenzwert oder der kältesten Schweißverbindung (56) abweicht und
die oder alle der gleichzeitig in einem Bild (54) aufgenommenen Schweißverbindungen (56), die als korrekt gekennzeichnet werden, wenn deren Temperatur um den oder um weniger als den vordefinierten Schwellenwert vom Referenzwert oder der kältesten Schweißverbindung (56) abweichen.

9. Verfahren nach einem der vorhergehenden Ansprüche, wobei die eingeprägte Stromstärke in und/oder die angelegte Spannung an die Wicklung zum Anregen der Wicklung nach Erreichen eines Temperaturunterschieds der Wicklung zur Umgebungstemperatur, die auf oder oberhalb eines vordefinierten Schwellenwerts liegt, für einen vordefinierten Zeitraum oder bis die Temperatur der Wicklung unter einen vordefinierten Wert abgefallen ist, abgeschaltet wird.

10. Verfahren nach einem der vorhergehenden Ansprüche, wobei, nachdem mehrere Bilder (56) an verschiedenen Aufnahmepositionen (26) aufgenommen wurden, insbesondere umfassend alle Schweißverbindungen (56) der Formspulen (40) eines Generatorstators (10), ein Prüfbericht erstellt wird, der für jede aufgenommene Schweißverbindung (56) eine Auswertung umfasst, wobei die Auswertung vorzugsweise umfasst, ob die jeweilige Schweißverbindung (56) fehlerhaft oder korrekt ist und welche Position , insbesondere welchen Winkel zum Ausgangspunkt (30), die jeweilige Schweißverbindung (56) umfasst.

11. Verfahren nach einem der vorhergehenden Ansprüche, wobei zwei Gruppen von Schweißverbindungen (56) definiert sind und in jeder Aufnahmeposition (26) jeweils mindestens zwei Bilder mit unterschiedlichen Kameras (22) aufgenommen werden, wobei die Kameras eine feste, unterschiedliche Ausrichtung sowie eine feste relative Position, insbesondere umfassend einen Abstand zueinander, aufweisen.

12. Halterung (16) zum Ausführen des Verfahrens nach einem der Ansprüche 1 bis 11, wobei die Halterung (16) mindestens eine oder genau zwei Kamerabefestigungen (20) aufweist, um mindestens eine oder genau zwei Kameras (22), insbesondere Infrarotkameras, fest mit der Halterung (16) zu verbinden und die Halterung (16) entweder ein Roboterarm oder ein Stativ (18) mit Rollen (82), insbesondere Kugelrollen, aufweist, um die Halterung (16) lagernd auf einem Untergrund (12) in verschiedenen Positionen zu Verschieben oder zu Verfahren.

13. Halterung (16) nach Anspruch 12, wobei Kamerapositionen der mindestens einen Kamera (22) durch die Kamerabefestigung (20) in mindestens zwei Richtungen (86, 80) variierbar und um mindestens eine Achse schwenkbar und in den dadurch bildbaren Positionen fixierbar ist.

14. Halterung (16) nach Anspruch 12 oder 13, wobei die Halterung (16) mindestens zwei Führungsrollen (24) zum Kontaktieren mit dem Generatorstator (10) aufweist, wobei die Führungsrollen vorzugsweise horizontal beabstandet nebeneinander angeordnet sind und zumindest um eine vertikale Achse rotierbar sind und/oder die Halterung (16) in einem Schienensystem verfahrbar ist und/oder die Halterung (16) einen Positionsgeber, insbesondere einen Drehgeber oder Inkrementalgeber, aufweist und/oder die Halterung (16) einen Antrieb, der insbesondere ein Verfahren der Halterung (16) von einer Aufnahmeposition in eine andere Aufnahmeposition selbsttätig mit Daten aus dem Positionsgeber regelt, aufweist.

15. System (14) mit mindestens einer Halterung (16) nach einem der Ansprüche 12 bis 14 und mindestens einer Kamera (22) und/oder einer Bedieneinheit und/oder einem Bildschirm und/oder einem Touchscreen.
